# EUROPEAN PATENT APPLICATION

(11) **EP 3 605 200 A1**
(43) Date of publication of application: **05.02.2020**
(21) Application number: 18775542.6
(22) Date of filing: 06.02.2018
(51) Int. Cl.: G02B 27/22, G03B 37/00, H04N 7/18, H04N 7/15

(54) **REFLECTIVE SURROUND DISPLAY SYSTEM**

(30) Priority: 29.03.2017 CN 201720316246 U
(71) Applicant: Solved By Technology Co., Limited, Kowloon, Hong Kong 999077 (CN)
(72) Inventor: LO, Chun Pong, Kowloon Hong Kong 999077 (CN)
(74) Representative: Klunker IP Patentanwälte PartG mbB
(86) International application number: PCT/CN2018/075414
(87) International publication number: WO 2018/177031

(57) **Abstract**

Disclosed is a cost-effective surround display system, which provides a 360-degree or less-than-360-degree (e.g., 180 degrees, 270 degrees, etc.) panoramic surround image, the panoramic surround image including a motion video or a static picture.

## Description

### CROSS REFERENCE OF RELATED APPLICATION

N/A

### BACKGROUND OF THE PRESENT INVENTION

### Field of Invention

The present disclosure relates to a reflective surround display system, and particularly to a reflective panoramic surround display system that takes a mirror-reversed fisheye image as a source image and forms a surround virtual image through optical reflection using a specific arrangement between the source image and a surround reflective surface, thereby providing a virtual-reality experience to a user.

### Description of Related Arts

A panoramic surround display system may be ideally applied to various kinds of application scenarios, e.g., to extend a screen of a computer system, to provide telepresence communications, to play wide-screen panoramic movies, and to create a virtual reality for simulations, trainings, virtual tours or video games, etc. Relevant solutions currently available in the prior art include: 1) a virtual reality system with a VR HMD (Virtual Reality Head Mount Display); 2) a surround display system having a plurality of flat panel displays; 3) a panoramic projection system that uses a plurality of projectors to project on an interior wall or other surfaces of a room; and 4) a curved TV. For solution 1), a viewer has to wear a VR HMD such as an eye mask because the virtual reality cannot be directly experienced with naked eyes, providing a poor user experience. For solution 2), to split a panoramic image, vendor-specific software or hardware is required for displaying the split images to a plurality of flat panel LED displays, respectively. Therefore, in solution 2), a plurality of flat panel displays are always needed to generate a 360-degree surround experience effect; however, in many specific implementations of the solution 2), the field of view is less than 180 degrees. For solution 3), it relies on projection of a surround image onto a projection screen or a wall surface, such that it requires a site-specific environment (e.g., inside a room) and further requires site-specific mounting or installing of projectors. Besides, the solution 3) always further requires split processing with software and pre-processing tools as well as combining the projected images based on site dimensions; therefore, its application scope is largely restricted and the cost is relatively high. For solution 4), the horizontal field of view is far less than 180 degrees; it also has issues such as a restricted application scope and a relatively high cost.

Owing to its advantages of short focal length (f=6∼16mm) and very large FOV (field of view) (about 180 degrees∼270 degrees), a fisheye lens has a wide array of applications for example in fields such as virtual reality, dome cinema, remote video conference, pipeline inspection, medical endoscopic examination, robot navigation, etc. In the aspect of panoramic monitoring, compared with a multi-lens system, the fisheye lens also has characteristics such as a compact structure, a relatively small volume, durability, and a low technical requirement; therefore, a panoramic monitoring system with the fisheye lens as a core also becomes one of hot issues in researches on panoramic monitoring in recent years. However, pictures taken by the fisheye lens have distortions, which are not only unfriendly to human eyes to observe, but also unfriendly to image recognition, so that the practicality of fisheye lens is lowered. Therefore, except in the photographic art, fisheye images have to be corrected to be suitable for human eyes to observe, or an image recognition technology has to be employed to expand the practicality of the fisheye lens. Fisheye image correction includes 2D correction and 3D correction: for the 2D fisheye image correction, pixel points in a fisheye image are directly mapped into a corrected image; and for the 3D fisheye image correction, pixel points in the fisheye image are first projected onto a space and then mapped to a corrected image based on a correction model.

In current markets, there is no lack of good fisheye lens. However, correction of fisheye images is not so satisfactory. Fisheye correction is computationally intensive. Although many software solutions may implement an accurate correction, a typical processor has a relatively slow correction speed, while a relatively good processor has a relatively high price and a relatively large power consumption; hardware solutions may perform a quick correction, but they lack flexibility or a reasonable system structure. Therefore, a panoramic surround display system is needed to implement various purposes such as virtual reality, telepresence communications, and panoramic monitoring, which is simple in system structure, easily upgradable, and inexpensive in fisheye image correction.

### SUMMARY OF THE PRESENT INVENTION

An object of the present disclosure is to provide a reflective panoramic surround display system that has a cost-effectiveness, a simple structure, and a wide array of applications, thereby solving the various problems existing in the prior art. The following is intended for briefly summarizing the technical solution of the present disclosure, not for limiting the scope of the present disclosure.

According to a technical solution of the present disclosure, a reflective surround display system is provided, comprising: a flat display panel for displaying a source image; and a surround reflective surface that is arranged opposite to the flat display panel, for reflecting the source image, wherein the source image is reflected by the surround reflective surface, such that a viewer may view a surround image corresponding to the source image. Preferably, in the technical solution according to the present disclosure, the surround image is a virtual image formed rear to the surround reflective surface relative to the viewer, but the surround image is not formed on any screen. Preferably, in the technical solution according to the present disclosure, the viewer is surrounded by the surround reflective surface and is located within an inner perimeter of the surround reflective surface, wherein the viewer may be a camera or human naked eyes.

Preferably, in the technical solution according to the present disclosure, the source image is a mirror-reversed fisheye image, wherein the fisheye image may be a motion video or a static picture, and the surround image is a panoramic surround image.

Preferably, in the technical solution according to the present disclosure, the surround reflective surface is an axially symmetric pattern formed by a cross-section line revolving about a central axis, and the central axis of the surround reflective surface is perpendicular to the flat display panel through a center of the fisheye image.

Preferably, in the technical solution according to the present disclosure, the cross-section line of the surround reflective surface is a straight line or a curved line.

Preferably, in the technical solution according to the present disclosure, the curved line is a parabola or an arc.

Preferably, in the technical solution according to the present disclosure, a surround angle of the surround reflective surface is equal to or less than 360 degrees, and an effective image area of the source image corresponds to the surround angle of the surround reflective surface.

Preferably, in the technical solution according to the present disclosure, the surround angle is 360 degrees, 270 degrees, 180 degrees, or 90 degrees.

Preferably, in the technical solution according to the present disclosure, one or more layers of the surround reflective surface are arranged co-axially; if more than one layer of the surround reflective surface is provided, the surround reflective surface should be made of a transparent material, and the effective image area of the source image is tailor-made to match with two or more layers of the surround reflective surface in a one-to-one manner.

The reflective panoramic surround display system provided by the present disclosure has a simple structure and cost-effectiveness; it may display a panoramic surround image (motion video or static picture) within a 360-degree range (e.g., 180 degrees, 270 degrees) and provides the viewer with an immersive virtual reality experience.

The reflective surround display system according to the present disclosure may use a fisheye image as a source image, and particularly may use a picture or video taken by a 360-degree camera or fisheye camera common in the market.

The reflective surround display system according to the present disclosure may reflect a source image and form in real time a panoramic surround image without software processing. A panoramic surround image may be formed in real time regardless of image resolution of the source image.

The reflective surround display system according to the present disclosure may provide a comfortable naked-eye virtual reality experience, such that a viewer is not required to wear special eyewear like a conventional virtual-reality head-mount device, thereby greatly improving experience comfortability.

The reflective surround display system according to the present disclosure may be applied to a wide array of purposes that require a surround display system, including teleconference communications and virtual-reality applications, etc.

The reflective surround display system according to the present disclosure may be used with various kinds of products and sizes, e.g., a panoramic surround display as a second display of a desktop computer, a panoramic surround display apparatus inside a telepresence facility, and mini-theatre making with this panoramic surround display apparatus, etc.

Features, technical effects and other advantages of the present disclosure will become obvious through further description with reference to the accompanying drawings.

### BRIEF DESCRIPTION OF THE DRAWINGS

Hereinafter, the embodiments of the present disclosure will be described in detail for a better understanding. The components in the drawings are not drawn in scales. The present disclosure will be described through examples with reference to the drawings, in which:
Fig. 1 shows a sectional structure arrangement of a reflective panoramic surround display system according to a preferred embodiment of the present disclosure, in which a cylindrical panoramic surround image is illustrated in the diagram.
Fig. 2 shows a geometrical configuration diagram of a surround reflective surface in the reflective panoramic surround display system of Fig. 1, in which a cross-section line of the surround reflective surface is a straight line.
Fig. 3 shows a top view of the reflective panoramic surround display system of Fig. 1.
Fig. 4 shows an example of a fisheye image displayed on a flat display panel in the reflective panoramic surround display system of Fig. 1.
Fig. 5 shows part of a surround image observed by a viewer corresponding to the fisheye image of Fig. 4 in the reflective panoramic surround display system according to a preferred embodiment of the present disclosure.
Fig. 6 shows another example of a fisheye image displayed on a flat display panel in the reflective panoramic surround display system of Fig. 1.
Fig. 7 shows part of a surround image observed by a viewer corresponding to the fisheye image of Fig. 6 in the reflective panoramic surround display system according to a preferred embodiment of the present disclosure.
Fig. 8 shows a geometrical configuration diagram of a surround reflective surface in a reflective panoramic surround display system according to an alternative embodiment of the present disclosure, in which a cross-section line of the surround reflective surface is a curved line.
Fig. 9 shows a local sectional structural diagram of a reflective panoramic surround display system according to an alternative embodiment of the present disclosure, in which a spherical surround effect is illustrated.
Fig. 10 shows a local sectional structural diagram of a reflective panoramic surround display system according to an alternative embodiment of the present disclosure, in which a specific surround effect with a larger vertical field of view is illustrated.
Fig. 11 shows a local sectional structural diagram of a reflective surround display system according to an alternative embodiment of the present disclosure, in which a conical surround effect is illustrated.
Fig. 12 shows a local sectional structural diagram of a reflective surround display system according to an alternative embodiment of the present disclosure, in which an inverted conical surround effect is illustrated.
Fig. 13 shows a local sectional structure arrangement diagram of a reflective surround display system according to an alternative embodiment of the present disclosure, in which an arrangement that a central axis of revolution of the surround reflective surface is not perpendicular to a flat display panel is illustrated.
Fig. 14 shows a schematic diagram of a non-360-degree surround reflective surface in the reflective surround display system according to an alternative embodiment of the present disclosure, in which an example of 180-degree surround reflective surface is illustrated.
Fig. 15 shows application examples of a 180-degree surround reflective surface in a reflective surround display system according to an alternative embodiment of the present disclosure, which shows the application examples of two structures in a 16:9 standard video transmission system where the cross-section line of the surround reflective surface is a 45-degree straight line (inverted conical surface) and a curved line (e.g., a parabola).

### DETAILED DESCRIPTION OF THE PREFERRED EMBODIMENT

Hereinafter, the technical contents, configuration features, and the achieved technical objects and technical effects of the preferred embodiments of the present disclosure will be illustrated in detail with reference to the accompanying drawings. References to "one embodiment/ alternative embodiment" and "an embodiment/ alternative embodiment," etc., indicate that the embodiment described may include a particular feature, structure or characteristic; however, it is not required that every embodiment must include such a particular feature, structure, or characteristic. Moreover, such phrases are not necessarily referring to the same embodiment. Further, when a particular feature, structure, or characteristic is described in connection with an embodiment, it indicates that it is within the knowledge of one skilled in the art to implement such feature, structure, or characteristic in connection with other embodiments whether or not explicitly described.

The reflective panoramic surround display system according to the present disclosure shall have two components in its physical structure:
(i) a flat display panel, a side of which for displaying an image source is mounted to face a surround reflective surface in (ii) (e.g., disposed on a certain firmware structure);
(ii) a surround reflective surface, an interior reflective surface of which is mounted to face the flat display panel in (i) (e.g., disposed on a certain firmware structure).

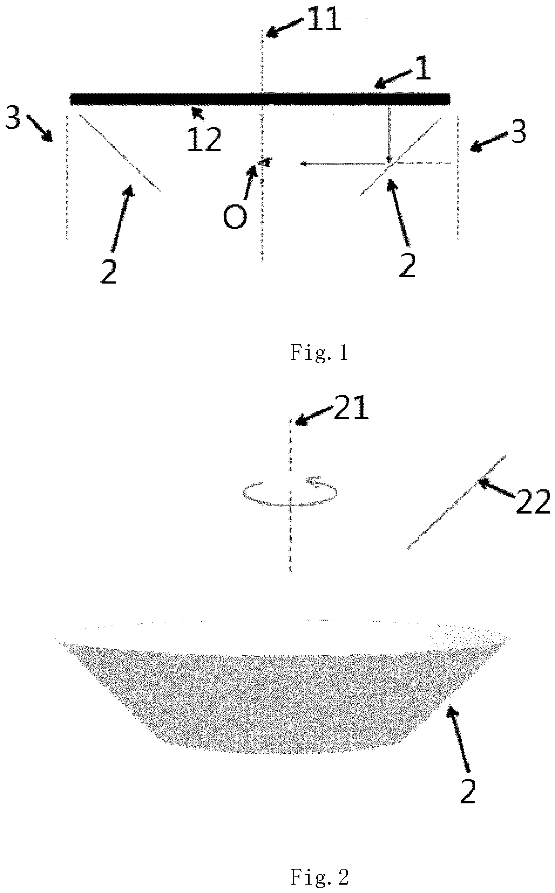

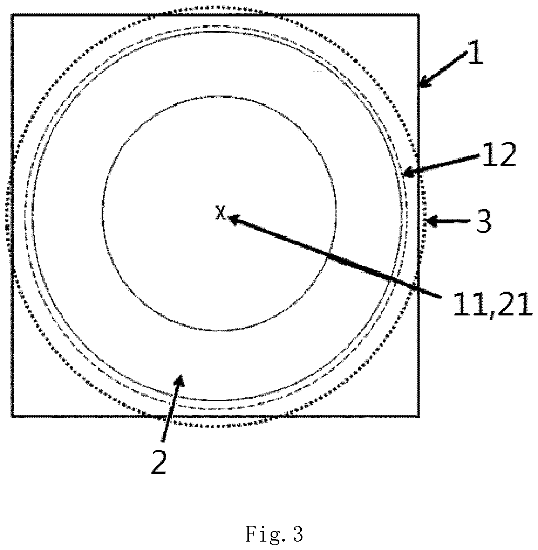

Fig. 1 shows a sectional structure arrangement of a reflective panoramic surround display system according to a preferred embodiment of the present disclosure, in which a cylindrical panoramic surround image 3 is illustrated. Fig. 2 shows a geometrical configuration diagram of a surround reflective surface in the reflective panoramic surround display system of Fig. 1, in which a cross-section line of the surround reflective surface is a straight line. Fig. 3 shows a top view of the reflective panoramic surround display system of Fig. 1.

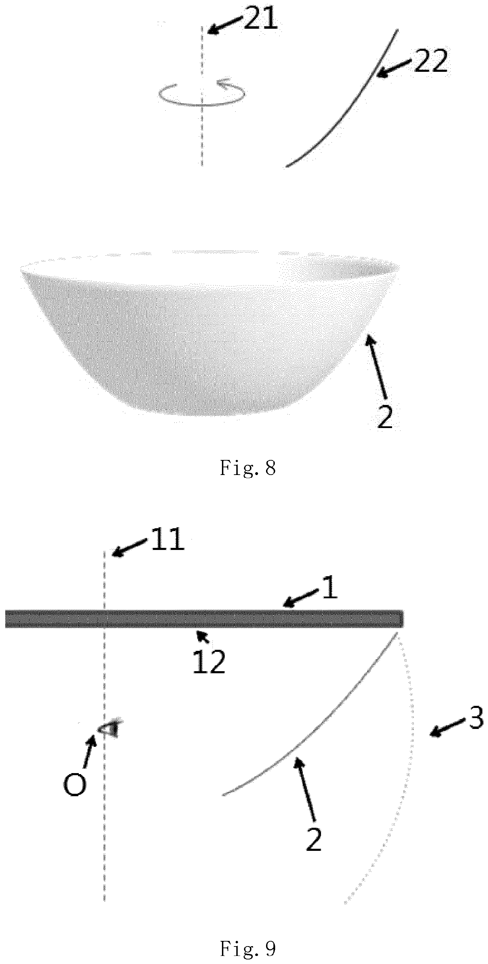

Figs. 1-3 show the structure and layout of a basic preferred embodiment of the present disclosure, wherein a side of a flat display panel 1 facing a surround reflective surface 2 displays a fisheye image 12 as a source image, the surround reflective surface 2 being shaped as an inverted conical frustum surface with its cross-section line 22 having an appropriate slant angle (preferably 45 degrees) relative to a central axis of revolution 21, such that the source image is reflected as indicated by the arrow in the figure and a layer of cylindrical panoramic surround image 3 is formed at an outer perimeter of the surround reflective surface 2. According to an optical reflective principle, the panoramic surround image 3 observed by a viewer O is a virtual image, which is not formed on any screen. Additionally, those skilled in the art will easily appreciate that the conical frustum surface formed with its cross-section line being a straight line as the surround reflective surface, as shown in Fig. 2, should be easier or cheaper to produce or manufacture than other alternative embodiments in Fig. 8, Fig. 9, and Fig. 10.

Preferably, as shown in Fig. 3, the central axis of revolution 21 of the surround reflective surface 2 coincides with the cross-section line 11 of the flat display panel 1 through a center of the fisheye image 12 as the source image. With reference to Fig. 3, the fisheye image 12 (e.g., a motion video or a static picture) is displayed on the flat display panel 1, the center of the fisheye image 12 coinciding with the central axis of revolution of the surround reflective surface 2 at point X.

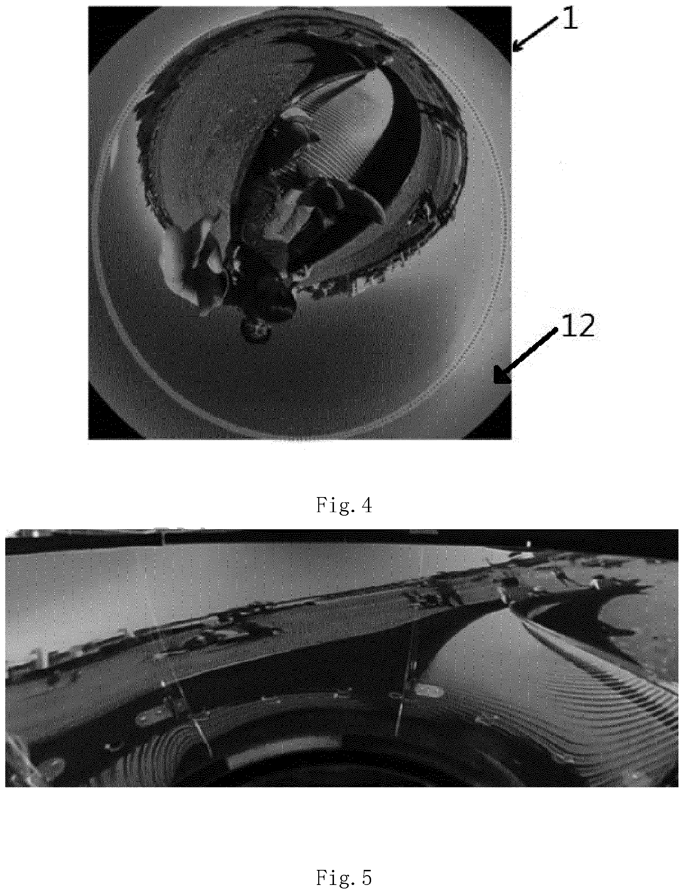

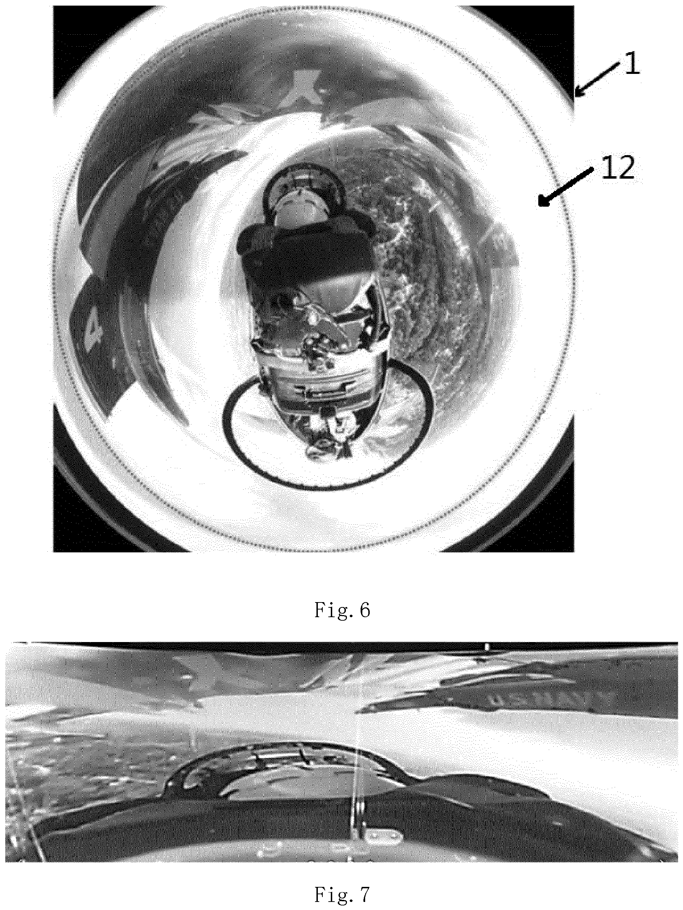

Fig. 4 shows an example of a fisheye image 12 displayed on a flat display panel 1 in the reflective panoramic surround display system of Fig. 1. Fig. 5 shows part of a surround image observed by a viewer corresponding to the fisheye image of Fig. 4 in the reflective panoramic surround display system according to a preferred embodiment of the present disclosure. The fisheye image shown in Fig. 4 is taken from a position of the top-view angle of a reality scene, wherein the circular dotted-line in the figure corresponds to the outer perimeter of the surround reflective surface. The surround reflective surface of the reflective panoramic surround display system according to a preferred embodiment of the present disclosure reflects the fisheye image to form a 360-degree panoramic (the horizontal field of view maintains continuous) surround image. In this case, the surround image will reproduce a surround panoramic field of view of the original reality scene. As observed by a viewer, this surround image is located behind the surround reflective surface. The surround image is virtual like a scenario in which people look into a plane mirror, which is not formed on any screen. The viewer (e.g., naked-eye or camera) is inside an inner perimeter of the surround reflective surface; to achieve a good viewing effect, the viewer's position is preferably around a central axis of the surround reflective surface. Fig. 6 shows another example of the fisheye image 12 on the flat display panel 1 in the reflective panoramic surround display system shown in Fig. 1, in which the circular dotted-line corresponds to the outer perimeter of the surround reflective surface. Fig. 7 shows part of a surround image observed by a viewer corresponding to the fisheye image of Fig. 6 in the reflective panoramic surround display system according to a preferred embodiment of the present disclosure.

Hereinafter, respective parts or elements of the reflective panoramic surround display system according to the present disclosure will be further illustrated with reference to the drawings.

### Flat Display Panel

A flat display panel adapted for the reflective panoramic surround display system of the present disclosure includes, but not limited to:
- an LED display;
- a rear projector screen on which the source image is projected from a video or an image projector;
- a device formed by combining two or more flat panel LED displays on a plane; and
- any other flat display mechanism that may produce a light image (e.g., an advertisement light box).

### Surround Reflective Surface

A geometric shape of the surround reflective surface may be described or constructed as revolving of a cross-section line about a central axis of revolution. In Fig. 2, the cross-section line is preferably a straight line 22, and a slant angle between the cross-section line and the central axis of revolution may be purposefully arranged to 45 degrees, i.e., to produce a cylindrical panoramic surround image surrounding the viewer, as shown in Fig. 1. In Fig. 8, the cross-section line is a curved line 22 instead of the straight line in Fig. 2; in an alternative embodiment, the curved line 22 revolves about the central axis of revolution 21 to form a surround reflective surface 2. In the alternative embodiments shown in Figs. 9-12, different shapes of cross-section lines will produce different shapes of surround reflective surfaces 2, while the different shapes of surround reflective surfaces 2 and different arrangements between the surround reflective surface 2 and the flat display panel 1 will produce surround view effects of different geometrical shapes.

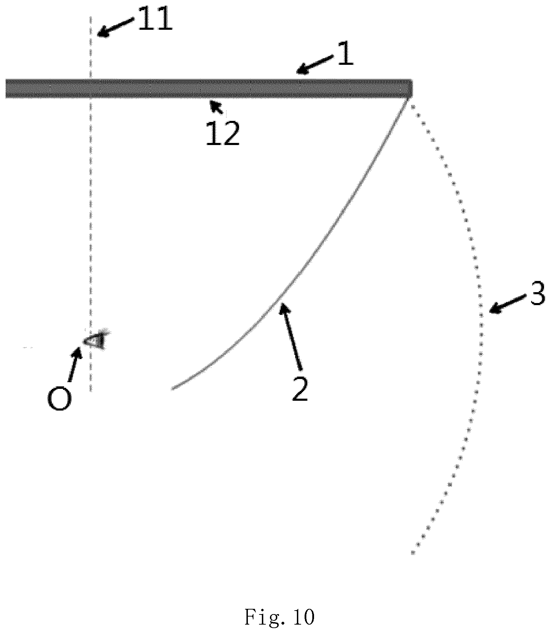

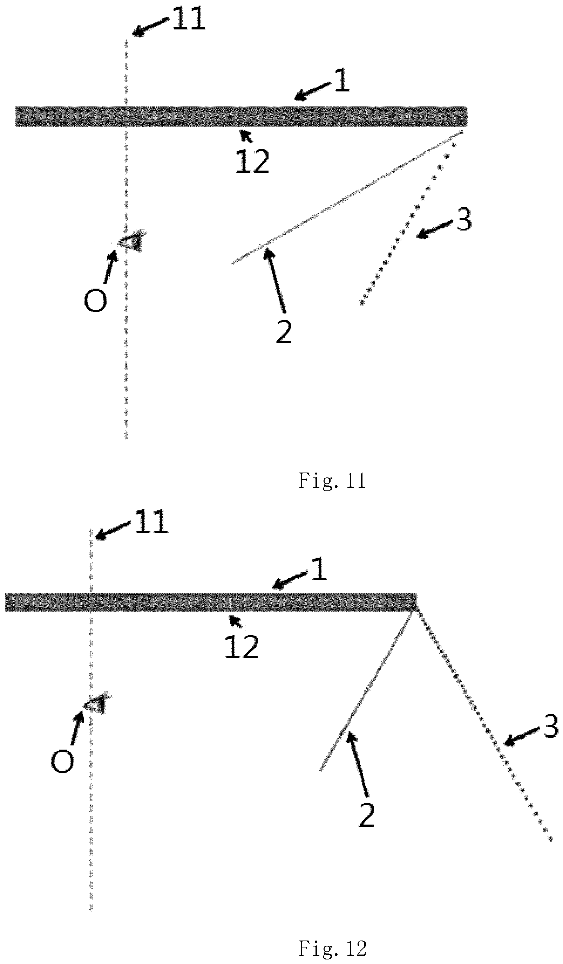

Fig. 9 shows a local sectional structural diagram of a reflective panoramic surround display system according to an alternative embodiment of the present disclosure, in which a spherical surround effect is illustrated. Fig. 10 shows a local sectional structural diagram of a reflective panoramic surround display system according to an alternative embodiment of the present disclosure, in which a specific surround effect with a larger vertical field of view is illustrated. Fig. 11 shows a local sectional structural diagram of a reflective surround display system according to an alternative embodiment of the present disclosure, in which a conical surround effect is illustrated. Fig. 12 shows a local sectional structural diagram of a reflective surround display system according to an alternative embodiment of the present disclosure, in which an inverted conical surround effect is illustrated. In other words, a virtual image of a spherical view is produced in Fig. 9. A virtual image of a spherical view is also produced in Fig. 10 except having a larger vertical field of view, such that it may be ideally applied to a scenario such as a theatre. Those skilled in the art should readily appreciate that in Figs. 9 -12, to produce arrangement manners with different surround effects, specific parameters of the fisheye lens or software for producing the fisheye image may be selected to enable the viewer to achieve an optimal visual experience when viewing the virtual image.

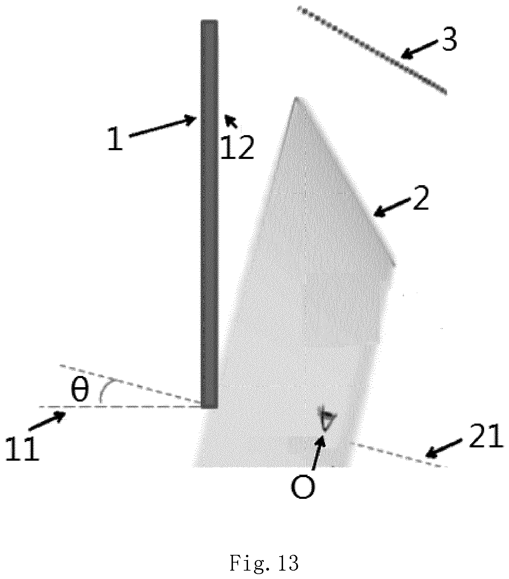

Fig. 13 shows a local sectional structural diagram of a reflective surround display system according to an alternative embodiment of the present disclosure, in which an arrangement that a central axis of revolution of the surround reflective surface is not perpendicular to a flat display panel is illustrated. Although the alternative embodiment of Fig. 13 adopts the geometrical shape of the surround reflective surface 2 in Fig. 1, its central axis of revolution (and the position of the viewer) has a slant angle 0 relative to the flat display panel 1, which may be a scene viewed by the viewer lying in a tilt bed, where the tilt bed is equipped with the surround display system according to the present disclosure. In this case, the viewer still experiences a panoramic surround effect; however, the geometrical shape of the panoramic surround image 3 formed at the outer perimeter of the surround reflective surface 2 is neither a symmetrical cylindrical shape nor a conical shape. Further, in this specific circumstance, the source image is not necessarily a conventional fisheye image; instead, it needs to be adjusted based on the slant angle, e.g., adjusting a source image format by software, so as to be properly mapped onto the surround field of view through the reflective surround display system.

Those skilled in the art will easily understand that for a specific visual effect (not a normal use scenario), the surround reflective surface is not limited to a symmetrical shape having a fixed cross-section line (constant line). Instead, for normal use and consistent panoramic view across the horizontal field of view, a symmetrical shape with the constant cross-section line (curved or straight) should be used.

### Source Image

According to the preferred embodiment of the present disclosure, when the central axis of revolution of the geometrically symmetrically constructed surround reflective surface is perpendicular to the flat display panel, examples of the fisheye image used as a source image may be:
- a video or picture taken by a 360-degree camera such as Ricoh Theta;
- a video or picture recorded by a video camera or photo camera with fisheye lens;
- a fisheye image produced using computer software which transforms a flat panoramic image to a fisheye image.

It needs to be particularly noted that in the reflective panoramic surround display system according to the present disclosure, to counteract a mirror reflection effect, the fisheye image displayed on the flat display panel should be a mirror-reversed image, which may be implemented using an image flipping function of an image playing hardware or software, such as an LED TV, a desktop computer or a media projector, which displays, plays or projects an image to the flat display panel, so as to counteract the mirror-reflection effect of the surround reflective surface.

In addition, different kinds of fisheye lens or fisheye functions may be used by the 360-degree camera or software to produce a fisheye image. However, to provide a better actual visual effect, a specific fisheye lens or fisheye function adapted to the reflective surface may be chosen.

### Less than 360-degree surround

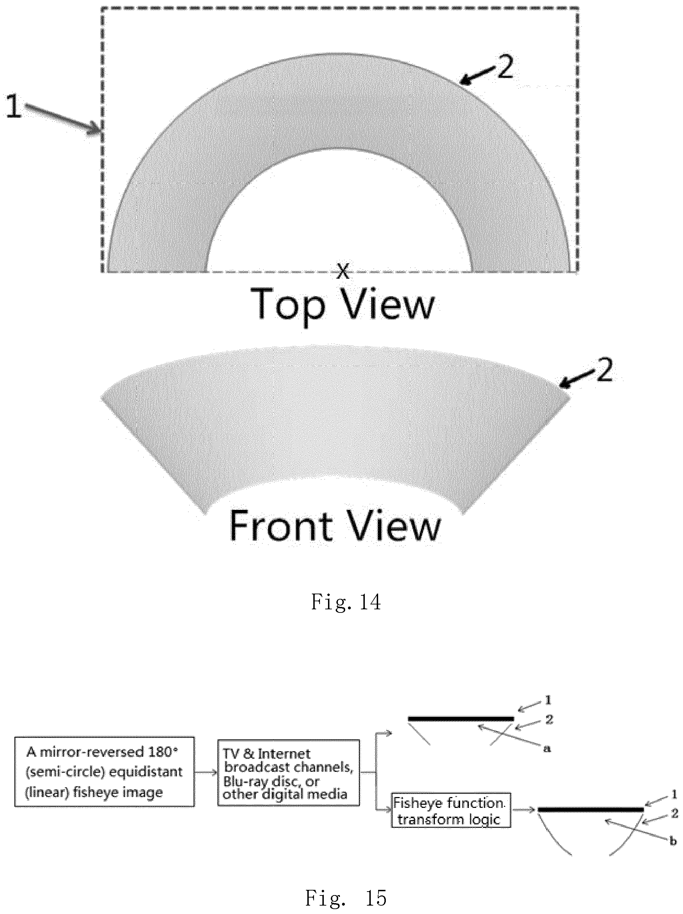

Those skilled in the art will readily appreciate that a panoramic surround display less than 360 degrees may be easily applied to the reflective panoramic surround display, thereby producing a more cost-effective product. Fig. 14 shows a schematic diagram of a non-360-degree surround reflective surface in the reflective surround display system according to an alternative embodiment of the present disclosure, in which an example of 180-degree surround reflective surface is illustrated. In this case, only a 180- degree surround reflective surface 2 and a smaller flat display panel 1 are used to display a half portion of the fisheye image. The example of Fig. 14 is suitable for a scenario where a 16:9 LED display is used as the flat display panel 1, which would be a very cost-effective way to provide a 180-degree panoramic surround image system for personal use. Based on application examples of the currently commonly-used 16:9 standard video transmission system, as shown in Fig. 15, a mirror-reversed 180-degree (semi-circle) equidistant (linear) fisheye image is used for standard transmission, and the transmission media may be TV broadcast channels , Internet broadcast channels, Blu-ray discs, or other digital media . As shown in Fig. 15, two structures, i.e., a 45-degree straight line (inverted conical surface) and a curved line (e.g., a parabola), are provided as the cross-section lines of the surround reflective surface 2 of the panorama surround display system. In the figure, the reference sign *a* represents a structure including a flat display panel 1 (e.g., a 16:9 LED TV) and a surround reflective surface 2 with its cross-section line being a 45-degree straight line, and the reference sign b represents a structure including a flat display panel 1 (e.g., a 16:9 LED TV) and a surround reflective surface 2 with its cross-section line being a curved line (e.g., a parabola). For the structure with the cross-section line of the surround reflective surface 2 being a 45-degree straight line (inverted conical surface), the received equidistant fisheye image may be directly used to display the panoramic image; for the structure with the cross-section line of the surround reflective surface 2 being a curved line (e.g., a parabola), a specific fisheye function image suitable for the curved reflective surface may be produced through fisheye function transform logic, e.g., through graphical processing chips in an external computer or built in a TV or projector. This will facilitate the manufacturers to produce different shapes and sizes of surround reflective surfaces based on different costs and application scenarios.

### Multi-Layer Surround Reflective Surface

According to an alternative example of the present disclosure, two or multiple layers of surround reflective surfaces (with a surround angle less than or equal to 360 degrees) installed about a same central axis of revolution may also be used to generate more than one layer of panoramic surround images, as long as the surround reflective surfaces use a transparent material, e.g., PVC. In this case, the fisheye image as the source image will be correspondingly composed of a plurality of corresponding concentric circular rings having a same circular center, wherein the respective circular fisheye images will be reflected by surround reflective surfaces of corresponding layers, such that two more or more layers of virtual images at different distances from the viewer will be formed to construct a special 3D visual effect. In a further alternative example, based on Fig. 2 and Fig. 8, the multiple layers of surround reflective surfaces may also be produced by multiple revolutions and spiraling out from the central axis. Of course, in this case, the source image must be tailor-made to match this special reflective surface.

### Advantages and Wide Array of Applications of the Present Disclosure

The reflective surround display system according to the present disclosure is independent of image resolution of the flat display panel or the source image. For example, if a product uses an LED panel display as the flat display panel, resolution upgrade may be done just by replacing the LED panel display, without a need of changing the surround reflective surface, even without a need of changing the chassis or fixture of the product, provided that the same size of LED panel display is used.

The present reflective surround display system forms a panoramic surround image by pure optical reflection with a physical reflective surface, without need of any software splitting and blending process.

The user or viewer will not be masked by wearables, thereby providing a more comfortable visual experience.

The present reflective surround display system may be anti-glare (the glare is caused by the reflective surface), which is almost glare-free to the viewer in most cases. This allows obtaining a clear video or picture of the panoramic image.

The image (virtual image) behind the reflective surface formed by the present reflective surround display system gives human eyes a feeling of spatial/depth effect.

Partial polarization effect due to reflection is comfortable to the viewer's eyes.

The present disclosure may be used in various kinds of products and sizes, including panoramic surround display as a second display of a desktop computer, a panoramic surround display apparatus inside a telepresence facility, and mini-theatre making with this panoramic surround display apparatus, etc. The present disclosure may even be used as a panoramic docking adapter over a smartphone screen to create a mini-panoramic image viewed via some mini-cameras (e.g., a baroscopic camera).

What have been disclosed are only preferred embodiments of the present disclosure, not intended for limiting the scope of the present disclosure. Therefore, any equivalent variations in accordance with the claimed scope of the present disclosure should still fall within the scope of the present disclosure. It should be understood that the embodiments (and/or other aspects) may be used in combination. In addition, many alternations may be made as inspired by the present disclosure to adapt specific situations or materials without departing from the scope of the present disclosure. By reading the description above, many other embodiments and alternations within the scope and spirit of the claims are obvious to those skilled in the art.

## Claims

1. A reflective surround display system, comprising: a flat display panel for displaying a source image; and a surround reflective surface arranged opposite to the flat display panel, for reflecting the source image, wherein the source image is reflected by the surround reflective surface, such that a viewer may view a surround image corresponding to the source image; the surround image is a virtual image formed behind the surround reflective surface relative to the viewer, the surround image being not formed on any screen; and the viewer is surrounded by the surround reflective surface and disposed within an inner perimeter of the surround reflective surface.

2. The reflective surround display system according to claim 1, wherein the viewer is a camera or a human naked eye.

3. The reflective surround display system according to claim 2, wherein the source image is a fisheye image, the fisheye image being a motion video or a static picture, the surround image being a panoramic surround image.

4. The reflective surround display system according to claim 3, wherein the source image is a mirror-reversed fisheye image.

5. The reflective surround display system according to claim 4, wherein the surround reflective surface is an axially symmetrical shape formed by revolving of the cross-section line about a central axis, the central axis of the surround reflective surface being perpendicular to the flat display panel through a center of the fisheye image.

6. The reflective surround display system according to claim 5, wherein the cross-section line of the surround reflective surface is a straight line or a curved line.

7. The reflective surround display system according to claim 6, wherein the curved line is a parabola or an arc.

8. The reflective surround display system according to any one of claims 1-7, wherein a surround angle of the surround reflective surface is equal to or smaller than 360 degrees, an effective image area of the source image corresponding to the surround angle of the surround reflective surface.

9. The reflective surround display system according to claim 8, wherein the surround angle of the surround reflective surface is 360 degrees, 270 degrees, 180 degrees, or 90 degrees.

10. The reflective surround display system according to any of claims 1-7, wherein one or multiple layers of the surround reflective surfaces are arranged co-axially; and if there is more than one layer of the surround reflective surface, the surround reflective surface is made of a transparent material, the effective image area of the source image one-to-one corresponding to the two or more layers of the surround reflective surface.
